# EUROPÄISCHE PATENTSCHRIFT

(11) **EP 3 973 199 B1**
(45) Veröffentlichungstag und Bekanntmachung des Hinweises auf die Patenterteilung: **06.08.2025**
(21) Anmeldenummer: 20710100.7
(22) Anmeldetag: 05.03.2020
(51) Int. Cl.: F16C 17/04, F16C 17/06, F16C 33/10, F16C 33/26

(54) **SEGMENTIERTES AXIALGLEITLAGER**
SEGMENTAL THRUST BEARING
PALIER LISSE AXIAL SEGMENTÉ

(30) Priorität: 22.05.2019 DE 102019207500
(43) Veröffentlichungstag der Anmeldung: 30.03.2022
(73) Patentinhaber: ZF Friedrichshafen AG, 88046 Friedrichshafen (DE); ZF Wind Power Antwerpen NV, 3920 Lommel (BE)
(72) Erfinder: VETS, Simon, 88046 Friedrichshafen (DE); KRIECKEMANS, Koen, 2200 Noorderwijk (BE); KAVAS, Nurhan, 88046 Friedrichshafen (DE); POPOWICZ, Robby, 88046 Friedrichshafen (DE)
(74) Vertreter: ZF Friedrichshafen AG
(86) Internationale Anmeldenummer: PCT/EP2020/055765
(87) Internationale Veröffentlichungsnummer: WO 2020/233847

(56) Entgegenhaltungen:
- WO-A1-2017/042322
- DE-A1- 102008 046 946
- DE-A1- 102015 211 470
- DE-A1- 3 337 749
- DE-A1- 4 217 268
- US-A- 1 767 238
- US-A- 3 784 266
- US-A- 5 028 148
- US-A1- 2014 102 810
- US-A1- 2016 010 684
- US-B1- 8 668 388
- US-B1- 9 732 791

## Beschreibung

Die Erfindung betrifft ein Axialgleitlager nach dem Oberbegriff von Anspruch 1, ein Axialgleitlager nach dem Oberbegriff von Anspruch 2, ein Axialgleitlager nach dem Oberbegriff von Anspruch 6 und ein Axialgleitlager nach dem Oberbegriff von Anspruch 7.

Die Druckschrift DE 10 2016 219 002 A1 offenbart Axialgleitlager für ein Planetenrad, die formschlüssig gegen Verdrehen gesichert sind. Jeweils zwei Axialgleitlager für ein Planetenrad sind dabei voneinander verschieden. Baugleiche Axialgleitlager auf beiden Seiten eines Planetenrads lassen sich aufgrund von Stufen, die in den Planetenbolzen vorhanden sind, nicht verwenden.

Aus dem Stand der Technik sind darüber hinaus sogenannte Kippsegmentlager und Axialgleitlager mit Keilflächen (Tapered Land) bekannt.

DE 102008046946 A1 offenbart die Merkmale des Obergriffs von Anspruch 1.

Der Erfindung liegt die Aufgabe zugrunde, ein Axialgleitlager verfügbar zu machen, das die den aus dem Stand der Technik bekannten Lösungen innewohnenden Nachteile nicht aufweist. Insbesondere soll das Lager kostengünstig zu fertigen und zu montieren sein.

Diese Aufgabe wird gelöst durch ein Axialgleitlager nach Anspruch 1 ein Axialgleitlager nach Anspruch 2, ein Axialgleitlager nach Anspruch 6 und ein Axialgleitlager nach Anspruch 7. Bevorzugte Weiterbildungen sind in den Unteransprüchen enthalten und ergeben sich aus den in den Figuren dargestellten Ausführungsbeispielen. Ein Axialgleitlager bezeichnet ein Gleitlager, das ausgebildet ist, Kräfte aufzunehmen, die parallel zu einer Drehachse des Gleitlagers verlaufen. Es zeichnet sich dadurch aus, dass es axiale, das heißt parallel zu der Drehachse verlaufende Kräfte ausschließlich in eine Richtung aufnehmen kann. Es kann keine entgegengesetzt verlaufenden axialen Kräfte aufnehmen. Mittel, die entgegengesetzt verlaufende axiale Kräfte aufnehmen, bilden ein weiteres Axialgleitlager.

Ein erstes erfindungsgemäßes Axialgleitlager weist mindestens zwei, bevorzugt mindestens drei, vier oder fünf physisch voneinander getrennte, jeweils einstückige Segmente auf. Jedes einzelne Segment des Axialgleitlagers ist also einstückig ausgeführt. Jeweils zwei der Segmente sind physisch voneinander getrennt, das heißt, es handelt sich um separate Stücke. Insbesondere sind keine zwei Segmente einstückig miteinander verbunden. Vorzugsweise sind die Segmente darüber hinaus separat voneinander angeordnet, sodass keine zwei Segmente einander berühren.

Erfindungsgemäß weisen ein oder mehrere, vorzugsweise mindestens zwei, drei, vier oder fünf Segmente des ersten Axialgleitlagers jeweils eine oder mehrere Keilflächen auf.

Ein zweites erfindungsgemäßes Axialgleitlager weist genau ein Segment auf. Dieses ist einstückig ausgebildet.

Erfindungsgemäß ist das Segment entlang seines Verslaufs um eine Drehachse des Axialgleitlagers herum unterbrochen. Dies bedeutet, dass das Segment nicht in sich geschlossen um die Drehachse herum verläuft. Stattdessen ist der Verlauf des Segments von einer Lücke unterbrochen, die frei von dem Segment ist. Insbesondere ist weder das Segment noch ein Teil des Segments rotationssymmetrisch - weder zu der Drehachse noch zu einer anderen Achse.

Die obengenannten Keilflächen bilden jeweils eine Gleitfläche aus. Dies bedeutet, dass sie ausgebildet sind, mit einer gemeinsamen, bevorzugt kreisringförmigen Gleitfläche, ein Gleitflächenpaar auszubilden. Die zwei Gleitflächen eines Gleitflächenpaars sind relativ zueinander verdrehbar und gleiten bei einer Drehung aneinander ab. Ein Spalt zwischen den Gleitflächen ist bevorzugt mit Schmierstoff gefüllt, sodass zwischen den Gleitflächen Flüssigkeits- oder Mischreibung auftritt.

Die Gleitflächen eines Gleitflächenpaars eines Axialgleitlagers sind ausgebildet, Kräfte mindestens in axialer Richtung aufeinander zu übertragen. Eine erste Gleitfläche eines Gleitflächenpaars ist also ausgebildet, Kräfte in eine bestimmte axiale Richtung auf die zweite Gleitfläche des Gleitflächenpaars zu übertragen. Umgekehrt ist die zweite Gleitfläche ausgebildet, Kräfte, die entgegengesetzt dazu in axialer Richtung verlaufen, auf die erste Gleitfläche zu übertragen.

Die Keilflächen der erfindungsgemäßen Axialgleitlager sind funktionsgleich zu den Keilflächen herkömmlicher Keilflächenlager. Entsprechend lässt sich die Form der Keilflächen eines herkömmlichen Keilflächenlagers auf die Keilflächen des erfindungsgemäßen Axialgleitlagers übertragen. So handelt es sich bei einer den Keilflächen bevorzugt ebenen Flächen, die bezüglich einer radial, das heißt orthogonal zu der Drehachse des Gleitlagers, verlaufenden Ebene verkippt sind. Eine bezüglich einer Ebene verkippte Fläche verläuft antiparallel zu der Ebene. Eine Achse, um welche die Ebene verkippt ist, verläuft mindestens teilweise, vorzugsweise ausschließlich radial. Bei einer mindestens teilweise radial verlaufenden Achse ist ein Richtungsvektor des Verlaufs der Achse radial orientiert. Die Keilflächen schließen mit der Ebene jeweils bevorzugt einen spitzen Winkel ein.

Die einzelnen Segmente der erfindungsgemäßen Axialgleitlager lassen sich sehr einfach montieren. Dies ist insbesondere bei großen Lagern von Vorteil. Da jedes einzelne Segment vergleichsweise klein ist, können auch Materialien verwendet werden, die für kleinere Gleitlager vorgesehen sind. Insbesondere kann auf Materialien für großindustriell hergestellte Lager mit entsprechenden Kostenvorteilen zurückgegriffen werden.

In einer bevorzugten Weiterbildung weisen ein oder mehrere, bevorzugt alle Segmente mindestens zwei, bevorzugt drei, vier oder fünf Keilflächen auf.

Die Keilflächen sind in einer darüber hinaus bevorzugten Weiterbildung bezüglich der Drehachse des Gleitlagers zueinander drehsymmetrisch. Die Keilflächen lassen sich also durch Drehung um einen oder mehrere Drehwinkel um die Drehachse des Gleitlagers aufeinander abbilden.

Zwischen jeweils zwei der Keilflächen verläuft in einer bevorzugten Weiterbildung eine Nut. Die Nut verläuft bevorzugt mindestens teilweise, bevorzugt vollständig bezüglich der Drehachse des Axialgleitlagers radial.

Die der Erfindung zugrundeliegende Idee lässt sich realisieren, indem das mindestens bzw. genau eine Segment anstelle der mindestens einen Keilfläche mindestens ein Kippsegment aufweist. Obige Aufführungen betreffend die Keilflächen gelten dabei mutatis mutandis für die Kippsegmente.

Ein oder mehrere, bevorzugt alle Segmente des Axialgleitlagers weisen jeweils mindestens eine Bohrung zur Ölversorgung auf. Bei der mindestens einen Bohrung handelt es sich vorzugsweise um eine Durchgangsbohrung, die insbesondere in eine zwischen zwei der Keilflächen verlaufende Nut.

Erfindungsgemäß ist das Axialgleitlager mit einem Träger der drehbar gelagert sein kann, gebildet. Bei dem Träger handelt es sich bevorzugt um ein einstückiges Bauteil. Ein oder mehrere, bevorzugt alle Segmente sind starr, das heißt, ohne die Möglichkeit einer Relativbewegung, in dem Träger fixiert. Die Fixierung erfolgt bevorzugt formschlüssig.

Die Fixierung der Segmente erfolgt mittels Vertiefungen in dem Träger. Der Träger weist also eine oder mehrere Vertiefungen zur Aufnahme jeweils eines Segments auf. Die Segmente werden so in die Vertiefungen eingesetzt, dass zwischen einem Segment und einer Vertiefung jeweils eine formschlüssige Verbindung zustande kommt. Die Vertiefungen sind dabei als Negativform jeweils eines Segments ausgebildet.

Der Träger ist mit mindestens einer Schmierstoffleitung ausgebildet, die in die Vertiefung mündet. Dadurch steht die Schmierstoffleitung schmierstoffleitend mit der Bohrung in Verbindung. Auf diese Weise lässt sich Schmierstoff in das Axialgleitlager einleiten.

Das erfindungsgemäße Axialgleitlager und dessen bevorzugte Weiterbildungen eignen sich besonders für die Lagerung eines Planetenrads in einem Planetenträger.

Zur Lagerung des Planetenrads sind bevorzugt zwei erfindungsgemäße Axialgleitlager vorgesehen, die sich an gegenüberliegenden Stirnseiten des Planetenrads befinden. Die Stirnseiten bilden dabei jeweils zusammen mit den Keilflächen oder Kippsegmenten Gleitflächenpaare. Als Träger für die Segmente der Axialgleitlager dient bevorzugt jeweils eine Wange des Planetenträgers.

Die Erfindung ermöglicht es, beidseitig des Planetenrads baugleiche Axialgleitlager zu verwenden.

Bevorzugte Ausführungsbeispiele der Erfindung sind in den Figuren dargestellt. Übereinstimmende Bezugsziffern kennzeichnen dabei gleiche oder funktionsgleiche Merkmale. Im Einzelnen zeigt:
Figur 1 ein segmentiertes Axialgleitlager mit Keilflächen; und
Figur 2 ein segmentiertes Axialgleitlager mit Kippsegmenten.

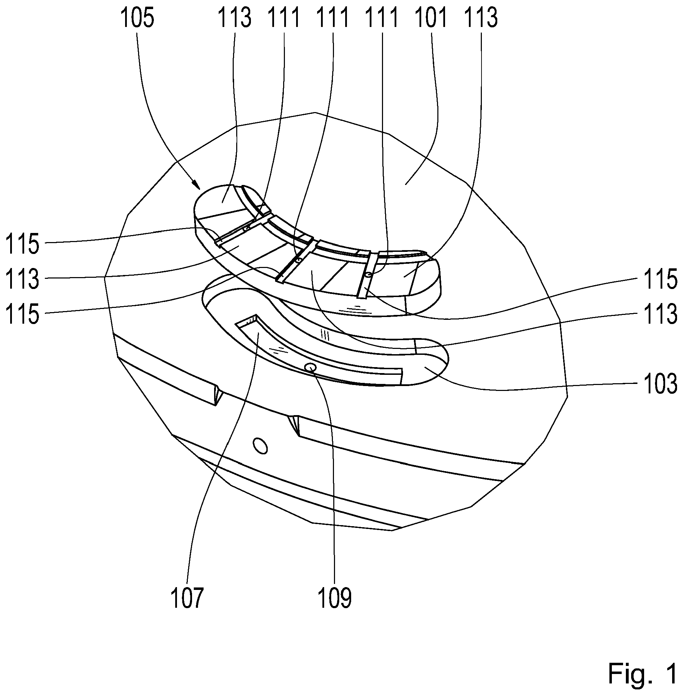

In Figur 1 ist ein Planetenträger 101 dargestellt. Dessen Wange weist eine Vertiefung 103 auf. Bei der Vertiefung 103 handelt es sich um eine Negativform eines Axialgleitlagersegments 105. Wenn das Axialgleitlagersegment 105 in die Vertiefung 103 eingesetzt ist, wird es von dieser formschlüssig fixiert.

Am Grund der Vertiefung 103 befindet sich eine Nut 107. In die Nut 107 mündet eine Schmierstoffleitung 109.

Das Axialgleitlagersegment 105 weist Durchgangsbohrungen 111 auf, die sich in axialer Richtung erstrecken. Zur einen Seite hin münden die Durchgangsbohrungen 111 in einen Lagerspalt, zur anderen Seite hin in die Nut 107. Auf diese Weise kommt eine schmierstoffleitende Verbindung zwischen der Schmierstoffleitung 109 und den Durchgangsbohrungen 111 zustande.

Das Axialgleitlagersegment 105 ist mit Keilflächen 113 versehen. Zwischen den Keilflächen 113 verlaufen Nuten 115. In diese münden die Durchgangsbohrungen 111.

Die Keilflächen 113 bilden zusammen mit einer weiteren Gleitfläche, etwa einer Stirnfläche eines Planetenrads, den oben genannten Lagerspalt.

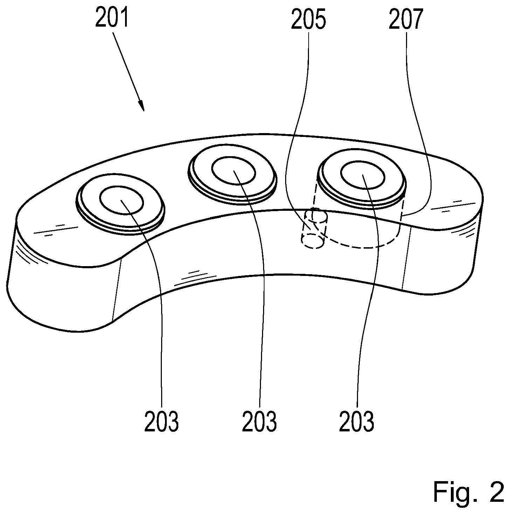

Das in Figur 2 dargestellte Axialgleitlagersegment 201 entspricht in seiner Grundform dem in Figur 1 dargestellten Axialgleitlagersegment 105. Anstelle der Keilflächen 113 weist es allerdings Kippsegmente 203 auf. Die Schmierung erfolgt über Durchgangsbohrungen 205, die in jeweils eine Vertiefung 207 münden, mit der das jeweilige Kippsegment 203 fixiert ist.

### Bezugszeichen

- 101: Planetenträger
- 103: Vertiefung
- 105: Axialgleitlagersegment
- 107: Nut
- 109: Schmierstoffleitung
- 111: Durchgangsbohrung
- 113: Keilfläche
- 115: Nut
- 201: Axialgleitlagersegment
- 203: Kippsegment
- 205: Axialgleitlagersegment
- 207: Vertiefung

## Patentansprüche

1. Axialgleitlager mit mindestens zwei jeweils einstückigen Segmenten (105) und einen Träger (101); wobei
mindestens eins der mindestens zwei Segmente (105) starr in dem Träger (101) fixiert ist; wobei
es sich bei den Segmenten (105) um separate Stücke handelt; wobei mindestens ein Segment (105) mindestens eine als Gleitfläche dienende Keilfläche (113) aufweist;
**dadurch gekennzeichnet, dass**
der Träger (101) mindestens eine Vertiefung (103) ausbildet; wobei
die Vertiefung (103) das mindestens eine Segment (105) formschlüssig fixiert; wobei mindestens eins der mindestens zwei Segmente (105) mindestens eine Bohrung (111) zur Ölversorgung aufweist; wobei
der Träger (101) mindestens eine in die Vertiefung (130) mündende Schmierstoffleitung (109) ausbildet; und wobei
die Schmierstoffleitung (109) schmierstoffleitend mit der Bohrung (111) in Verbindung steht.

2. Axialgleitlager mit genau einem Segment und einem Träger (101); wobei das Segment einstückig ausgebildet ist; wobei
das Segment entlang seines Verlaufs um eine Drehachse des Axialgleitlagers herum unterbrochen ist; wobei
das Segment mindestens eine als Gleitfläche dienende Keilfläche aufweist; und wobei
das genau eine Segment starr in dem Träger (101) fixiert ist; wobei
der Träger (101) mindestens eine Vertiefung (103) ausbildet; wobei
die Vertiefung (103) das mindestens eine Segment (105) formschlüssig fixiert;
wobei das genau eine Segment mindestens eine Bohrung (111) zur Ölversorgung aufweist; wobei
der Träger (101) mindestens eine in die Vertiefung (130) mündende Schmierstoffleitung (109) ausbildet; und wobei
die Schmierstoffleitung (109) schmierstoffleitend mit der Bohrung (111) in Verbindung steht.

3. Axialgleitlager nach einem der vorhergehenden Ansprüche; wobei mindestens eins der mindestens zwei Segmente (105) bzw. das genau eine Segment mindestens zwei Keilflächen (113) aufweist.

4. Axialgleitlager nach dem vorhergehenden Anspruch; wobei die Keilflächen (113) bezüglich einer Drehachse des Gleitlagers zueinander drehsymmetrisch sind.

5. Axialgleitlager nach einem der vorhergehenden zwei Ansprüche; wobei zwischen jeweils zwei Keilflächen (113) eine Nut (115) verläuft.

6. Axialgleitlager mit mindestens zwei jeweils einstückigen Segmenten (201) und einen Träger (101); wobei
mindestens eins der mindestens zwei Segmente (105) starr in dem Träger (101) fixiert ist; wobei
es sich bei den Segmenten (201) um separate Stücke handelt; wobei mindestens ein Segment (201) mindestens ein als Gleitfläche dienendes Kippsegment (203) aufweist; wobei mindestens eins der mindestens zwei Segmente (105) mindestens eine Bohrung (111) zur Ölversorgung aufweist; wobei
der Träger (101) mindestens eine in die Vertiefung (130) mündende Schmierstoffleitung (109) ausbildet; und wobei
die Schmierstoffleitung (109) schmierstoffleitend mit der Bohrung (111) in Verbindung steht.

7. Axialgleitlager mit genau einem Segment und einen Träger (101); wobei das Segment starr in dem Träger (101) fixiert ist; wobei
das Segment einstückig ausgebildet ist; wobei
das Segment entlang seines Verlaufs um eine Drehachse des Axialgleitlagers herum unterbrochen ist; wobei mindestens ein als Gleitfläche dienendes Kippsegment (203) an dem Segment angeordnet ist; wobei das genau eine Segment mindestens eine Bohrung (111) zur Ölversorgung aufweist; wobei
der Träger (101) mindestens eine in die Vertiefung (130) mündende Schmierstoffleitung (109) ausbildet; und wobei
die Schmierstoffleitung (109) schmierstoffleitend mit der Bohrung (111) in Verbindung steht.

## Claims

1. Axial plain bearing having at least two in each case integral segments (105) and a carrier (101); wherein
at least one of the at least two segments (105) is fixed rigidly in the carrier (101); wherein
the segments (105) are separate pieces; wherein
at least one segment (105) has at least one wedge surface (113) which serves as a sliding surface;
**characterized in that**
the carrier (101) forms at least one depression (103); wherein
the depression (103) fixes the at least one segment (105) in a form-fitting manner; wherein
at least one of the at least two segments (105) has at least one bore (111) for supply of oil; wherein
the carrier (101) forms at least one lubricant line (109) which opens out into the depression (130); and wherein the lubricant line (109) is connected in a lubricant-conducting manner to the bore (111).

2. Axial plain bearing having exactly one segment and a carrier (101); wherein
the segment is formed integrally; wherein
the segment is interrupted along its extension around an axis of rotation of the axial plain bearing; wherein
the segment has at least one wedge surface which serves as a sliding surface; and wherein
the exactly one segment is fixed rigidly in the carrier (101); wherein
the carrier (101) forms at least one depression (103); wherein
the depression (103) fixes the at least one segment (105) in a form-fitting manner; wherein
the exactly one segment has at least one bore (111) for supply of oil; wherein
the carrier (101) forms at least one lubricant line (109) which opens out into the depression (130); and wherein the lubricant line (109) is connected in a lubricant-conducting manner to the bore (111).

3. Axial plain bearing according to either of the preceding claims; wherein
at least one of the at least two segments (105) or the exactly one segment has at least two wedge surfaces (113).

4. Axial plain bearing according to the preceding claim; wherein
the wedge surfaces (113) are rotationally symmetrical with respect to one another in relation to an axis of rotation of the plain bearing.

5. Axial plain bearing according to either of the preceding two claims; wherein
a groove (115) extends between in each case two wedge surfaces (113).

6. Axial plain bearing having at least two in each case integral segments (201) and a carrier (101); wherein
at least one of the at least two segments (105) is fixed rigidly in the carrier (101); wherein
the segments (201) are separate pieces; wherein
at least one segment (201) has at least one tilting segment (203) which serves as a sliding surface; wherein at least one of the at least two segments (105) has at least one bore (111) for supply of oil; wherein
the carrier (101) forms at least one lubricant line (109) which opens out into the depression (130); and wherein the lubricant line (109) is connected in a lubricant-conducting manner to the bore (111).

7. Axial plain bearing having exactly one segment and a carrier (101); wherein
the segment is fixed rigidly in the carrier (101); wherein
the segment is formed integrally; wherein
the segment is interrupted along its extension around an axis of rotation of the axial plain bearing; wherein
at least one tilting segment (203) serving as a sliding surface is arranged on the segment; wherein
the exactly one segment has at least one bore (111) for supply of oil; wherein
the carrier (101) forms at least one lubricant line (109) which opens out into the depression (130); and wherein the lubricant line (109) is connected in a lubricant-conducting manner to the bore (111).

## Revendications

1. Palier lisse axial avec au moins deux segments (105) respectivement d'un seul tenant et un support (101) ; au moins un des au moins deux segments (105) étant fixé de manière rigide dans le support (101) ;
les segments (105) étant des pièces séparées ;
au moins un segment (105) comportant au moins une surface cunéiforme (113) servant de surface de glissement ;
**caractérisé en ce que**
le support (101) forme au moins un renfoncement (103) ;
le renfoncement (103) fixe par complémentarité de forme l'au moins un segment (105) ;
au moins un des au moins deux segments (105) comportant au moins un alésage (111) pour l'alimentation en huile ; le support (101) formant au moins un conduit de lubrifiant (109) débouchant dans le renfoncement (130) ; et
le conduit de lubrifiant (109) étant relié à l'alésage (111) de manière à acheminer du lubrifiant.

2. Palier lisse axial avec exactement un segment et un support (101) ;
le segment étant formé d'un seul tenant ;
le segment étant interrompu le long de son tracé autour d'un axe de rotation du palier lisse axial ;
le segment comportant au moins une surface cunéiforme servant de surface de glissement ; et
le segment exactement étant fixé de manière rigide dans le support (101) ;
le support (101) formant au moins un renfoncement (103) ; le renfoncement (103) fixant par complémentarité de forme l'au moins un segment (105) ;
le segment exactement comportant au moins un alésage (111) pour l'alimentation en huile ;
le support (101) réalisant au moins un conduit de lubrifiant (109) débouchant dans le renfoncement (130) ; et
le conduit de lubrifiant (109) étant relié à l'alésage (111) de manière à acheminer du lubrifiant.

3. Palier lisse axial selon l'une des revendications précédentes ;
au moins un des au moins deux segments (105) ou le segment exactement comportant au moins deux surfaces cunéiformes (113) .

4. Palier lisse axial selon l'une des revendications précédentes ;
les surfaces cunéiformes (113) étant symétriques en rotation l'une par rapport à l'autre par rapport à un axe de rotation du palier lisse.

5. Palier lisse axial selon l'une des deux revendications précédentes ;
une rainure (115) s'étendant entre respectivement deux surfaces cunéiformes (113).

6. Palier lisse axial avec au moins deux segments (201) respectivement d'un seul tenant et un support (101) ;
au moins un des au moins deux segments (105) étant fixé de manière rigide dans le support (101) ;
les segments (201) étant des pièces séparées ;
au moins un segment (201) comportant au moins un segment de basculement (203) servant de surface de glissement ;
au moins un des au moins deux segments (105) comportant au moins un alésage (111) pour l'alimentation en huile ;
le support (101) formant au moins un conduit de lubrifiant (109) débouchant dans le renfoncement (130) ; et
le conduit de lubrifiant (109) étant relié à l'alésage (111) de manière à acheminer du lubrifiant.

7. Palier lisse axial avec exactement un segment et un support (101) ;
le segment étant fixé de manière rigide dans le support (101) ;
le segment étant réalisé d'un seul tenant ;
le segment étant interrompu le long de son tracé autour d'un axe de rotation du palier lisse axial ;
au moins un segment de basculement (203) servant de surface de glissement étant disposé sur le segment ;
le segment exactement comportant au moins un alésage (111) pour l'alimentation en huile ;
le support (101) réalisant au moins un conduit de lubrifiant (109) débouchant dans le renfoncement (130) ; et
le conduit de lubrifiant (109) étant relié à l'alésage (111) de manière à acheminer du lubrifiant.
